# EUROPEAN PATENT APPLICATION

(11) **EP 1 396 804 A1**
(43) Date of publication of application: **10.03.2004**
(21) Application number: 02736032.0
(22) Date of filing: 07.06.2002
(51) Int. Cl.: G06F 17/60

(54) **ELECTRONIC COMMERCE SUPPORT METHOD**

(30) Priority: 11.06.2001 JP 2001175432
(71) Applicant: Sony Corporation, Tokyo 141-0001 (JP)
(72) Inventor: HASUMI, Yoshitsugu, SONY FINANCE INTERNATIONAL,Inc, Minato-ku, Tokyo 107-0062 (JP); SHIOTANI, Keiji, SONY FINANCE INTERNATIONAL, INC., Minato-ku, Tokyo 107-0062 (JP)
(74) Representative: Horner, David Richard
(86) International application number: PCT/JP2002/005701
(87) International publication number: WO 2002/101618

(57) **Abstract**

The present invention is concerned with an electronic commerce supporting method for reducing a charge-back risk on cyber shops in credit sales in electronic commerce and an electronic commerce method using such an electronic commerce supporting method. The methods are carried out by a system having a goods purchase candidate (6) who connects to a cyber shop (10) via a communications network (4) to purchase goods and selects a credit card payment, a cyber shop (10) which requests the goods purchase candidate (6) to send private data relative to the credit card and transfers the private data added to a credit confirmation message, and an electronic commerce support center (2) which compares the private data added to the credit confirmation message with private data of a true holder of the credit card which is registered in an authentication database (24), generates authentication support data for supporting in determining whether the goods purchase candidate (6) is the true holder or not and sends the authentication support data to the cyber shop (10).

## Description

### Technical Field

The present invention relates to an electronic commerce supporting method for carrying out electronic commerce smoothly and safely and an electronic commerce method using such an electronic commerce supporting method, and more particularly to an electronic commerce supporting method for reducing a charge-back risk on cyber shops in credit sales in electronic commerce and an electronic commerce method using such an electronic commerce supporting method.

### Background Art

Electronic commerce have increasingly become active for selling and buying goods or services (hereinafter referred to as "goods") in cyber shops or cyber malls as one form of using a cyber space constructed on a communications network such as the Internet or the like.

Present electronic commerce is mainly performed as credit sales for settling the charge a predetermined period of time after goods are purchased. When a goods purchase candidate purchases goods in a cyber shop or a cyber mall, the goods purchase candidate enters credit card information from a browser displayed on the display unit of a personal computer (hereinafter referred to as "PC") to complete purchases. A credit card is a card for use in credit sales settling the charge a predetermined period of time after goods are purchased in a cashless manner.

In real transactions, when a purchaser presents a credit card at the time of purchasing goods, the shop asks the credit card company to confirm credit of the card through on-line communications, and the credit card company notifies the result of the confirmed credit to the shop. The shop can thus avoid a credit risk.

In electronic commerce, a goods purchase candidate enters the credit card information usually by entering only the credit card number or both the credit card number and the expiry date of the card from the browser and transmitting the credit card information to the cyber shop.

The cyber shop transmits the received data such as the credit card number and the expiry date of the card to the credit card company. The credit card company confirms the effectiveness of the credit card and the credit limitation based on the transmitted data, and transmits the result to the cyber shop. Based on the received confirmed result, the cyber shop determines whether the goods are to be sold or not. In this manner, the cyber shop can avoid a credit risk in electronic commerce.

Since electronic commerce are carried out in a cyber space and goods purchase candidates and cyber shops are not in face-to-face relation to each other unlike transactions in real shops, it is impossible to actually confirm credit cards and find forgeries and check signatures on credit cards. Therefore, it is extremely difficult for cyber shops to determine whether credit card users in electronic commerce are true user or not. There is no effective means for preventing, in advance, unauthorized users from illegally purchasing goods through pretender.

Though no effective means are available for preventing, in advance, damage to cyber shops due to fraud such as illegal use of cards by way of pretender, since the cyber shops have the right to decide whether to sell goods or not, the cyber shops assume a charge-back (pay-back) risk for making up a loss which may be caused to a true credit holder or a credit company by the settlement of the charge for unlawfully purchased goods.

The charge-back risk on the cyber shops in electronic commerce is higher than in real transactions. Particularly in the on-line shopping which handles highly distributed goods such as articles, the cyber shops run a very high charge-back risk. Such a risk presents a large obstacle to the development of the electronic commerce.

It is therefore important to increase the security of electronic commerce by allowing the cyber shops only not to confirm credit but also determine in real-time whether true users are using credit cards or not.

It is an object of the present invention to provide an electronic commerce supporting method for reducing a charge-back risk on virtual shops in credit sales in electronic commerce and an electronic commerce method using such an electronic commerce supporting method.

### Disclosure of Invention

The above object can be achieved by an electronic commerce supporting method to be carried out on an authentication support server, the electronic commerce supporting method providing private data from a goods purchase candidate who selects a credit card payment when the goods purchase candidate purchases goods in a cyber shop on a communications network, comparing the private data with registered private data of a true holder of the credit card, and generating authentication support data for supporting in determining whether said goods purchase candidate is said true holder or not and sending the authentication support data to said cyber shop.

In the above electronic commerce supporting method to be carried out on an authentication support server, when the private data is provided from said goods purchase candidate, the number of private data to be entered is determined based on the amount of money for purchasing the goods.

In the above electronic commerce supporting method to be carried out on an authentication support server, said private data includes any one of at least birthday information, telephone number information, name, and address.

The above object can also be achieved by an electronic commerce method to be carried out on an electronic commerce server for selling goods on a communications network, the electronic commerce method comprising the steps of receiving, from an authentication support server, an authentication result of private data entered from a goods purchase candidate who selects a credit card payment for goods to be purchased, and determining whether said goods are to be sold or not based on said authentication result.

In the above electronic commerce method to be carried out on an electronic commerce server, said step of determining comprises the step of determining whether said goods are to be sold or not based on an amount of money to be paid and said authentication result.

In the above electronic commerce method to be carried out on an electronic commerce server, said private data includes any one of at least birthday information, telephone number information, name, and address.

The above object can also be achieved by an electronic commerce support program to be carried out on an authentication support server, the electronic commerce support program providing private data from a goods purchase candidate who selects a credit card payment when the goods purchase candidate purchases goods in a cyber shop on a communications network, comparing the private data with registered private data of a true holder of the credit card, and generating authentication support data for supporting in determining whether said goods purchase candidate is said true holder or not and sending the authentication support data to said cyber shop.

In the above electronic commerce support program to be carried out on an authentication support server, when the private data is provided from said goods purchase candidate, the number of private data to be entered is determined based on the amount of money for purchasing the goods.

In the above electronic commerce support program to be carried out on an authentication support server, said private data includes any one of at least birthday information, telephone number information, name, and address.

The above object can further be achieved by an electronic commerce support program to be carried out an electronic commerce server for selling goods on a communications network, the electronic commerce support program comprising the steps of receiving, from an authentication support server, an authentication result of private data entered from a goods purchase candidate who selects a credit card payment for goods to be purchased, and determining whether said goods are to be sold or not based on said authentication result.

In the above electronic commerce support program to be carried out an electronic commerce server, the step of determining comprises means for determining whether said goods are to be sold or not based on an amount of money to be paid and said authentication result.

In the electronic commerce support program to be carried out an electronic commerce server, said private data includes any one of at least birthday information, telephone number information, name, and address.

The above object can further be achieved by an authentication support server, the authentication support server providing private data from a goods purchase candidate who selects a credit card payment when the goods purchase candidate purchases goods in a cyber shop on a communications network, and comparing the private data with registered private data of a true holder of the credit card, generating authentication support data for supporting in determining whether said goods purchase candidate is said true holder or not and sending the authentication support data to said cyber shop.

The above object can further be achieved by an electronic commerce server for selling goods on a communications network, the electronic commerce server receiving, from an authentication support server, an authentication result of private data entered from a goods purchase candidate who selects a credit card payment for goods to be purchased, and determining whether said goods are to be sold or not based on said authentication result.

### Brief Description of the Drawings

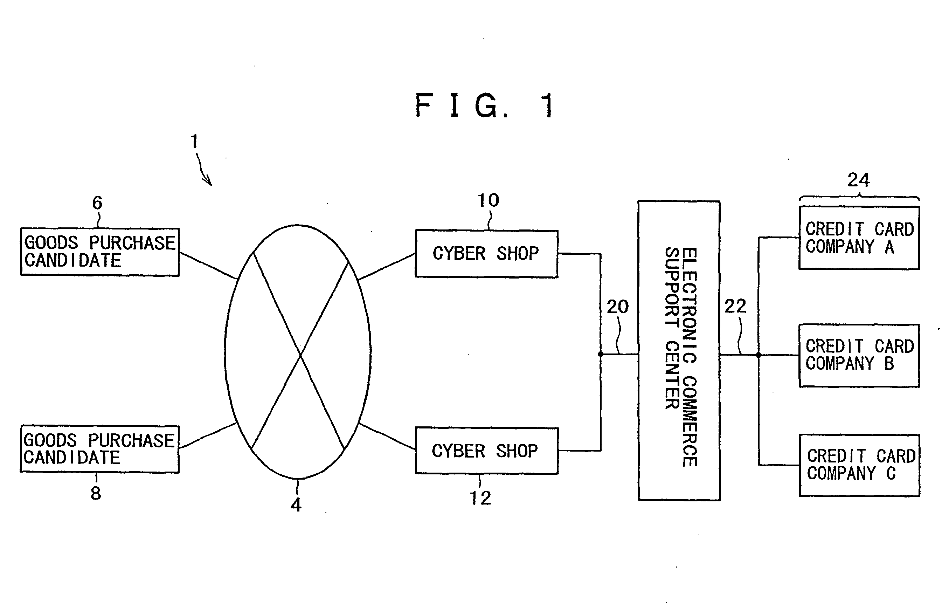

Fig. 1 is a block diagram of a network structure of an electronic commerce supporting system for carrying out an electronic commerce supporting method and an electronic commerce method according to an embodiment of the present invention.

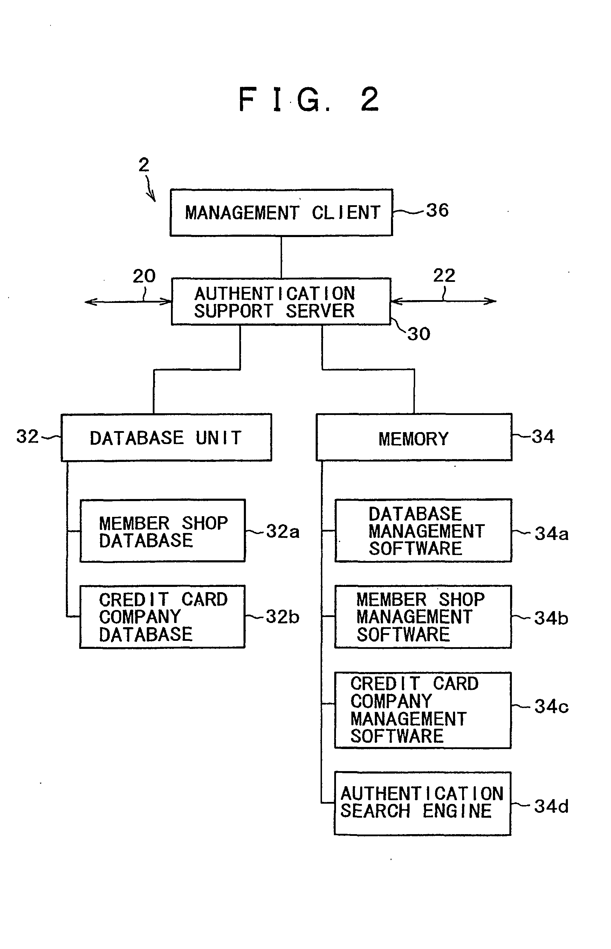

Fig. 2 is a block diagram showing an internal structure of an electronic commerce supporting center 2 in the electronic commerce supporting system for carrying out the electronic commerce supporting method and the electronic commerce method according to the embodiment of the present invention.

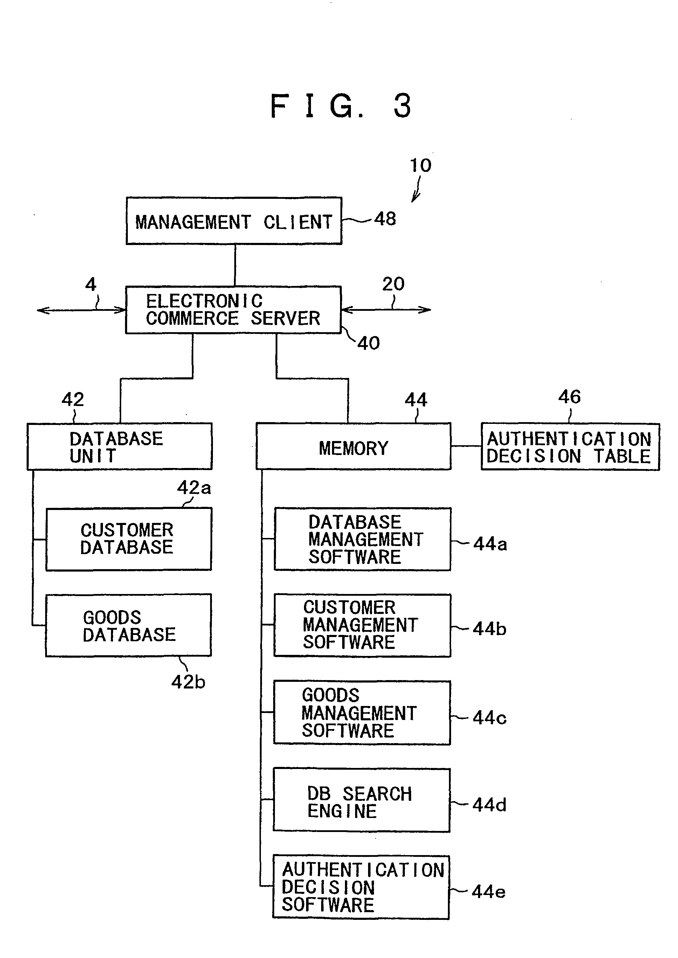

Fig. 3 is a block diagram showing an internal structure of a cyber shop 10 in the electronic commerce supporting system for carrying out the electronic commerce supporting method and the electronic commerce method according to the embodiment of the present invention.

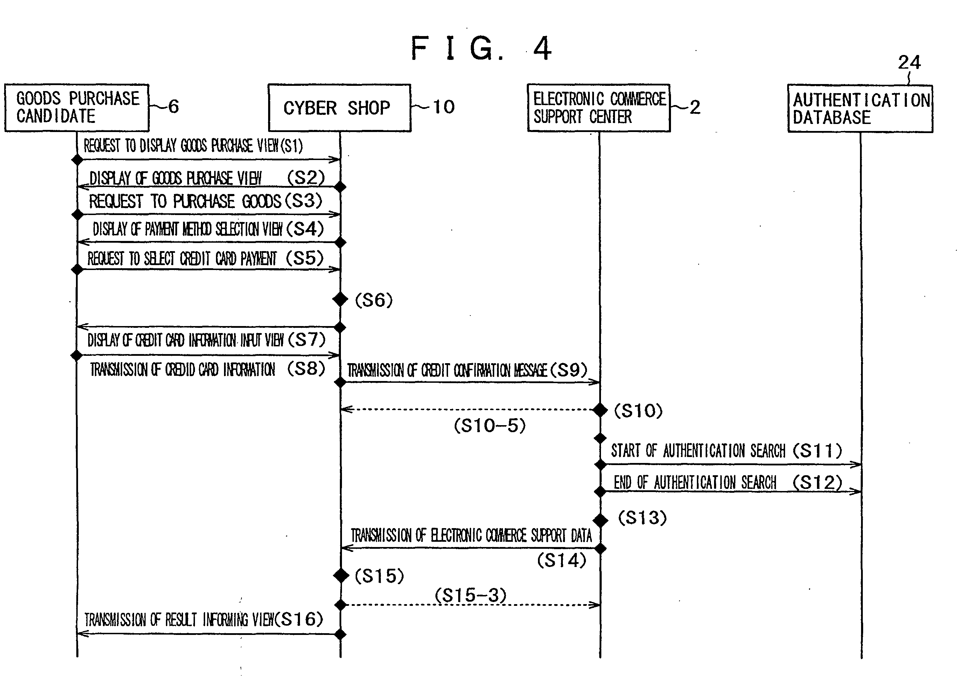

Fig. 4 is a diagram showing a chronological sequence of an electronic commerce transaction carried out by a goods purchase candidate 6, a cyber shop 10, an electronic commerce support center 2, and an authentication database 24 in the electronic commerce supporting system for carrying out the electronic commerce supporting method and the electronic commerce method according to the embodiment of the present invention.

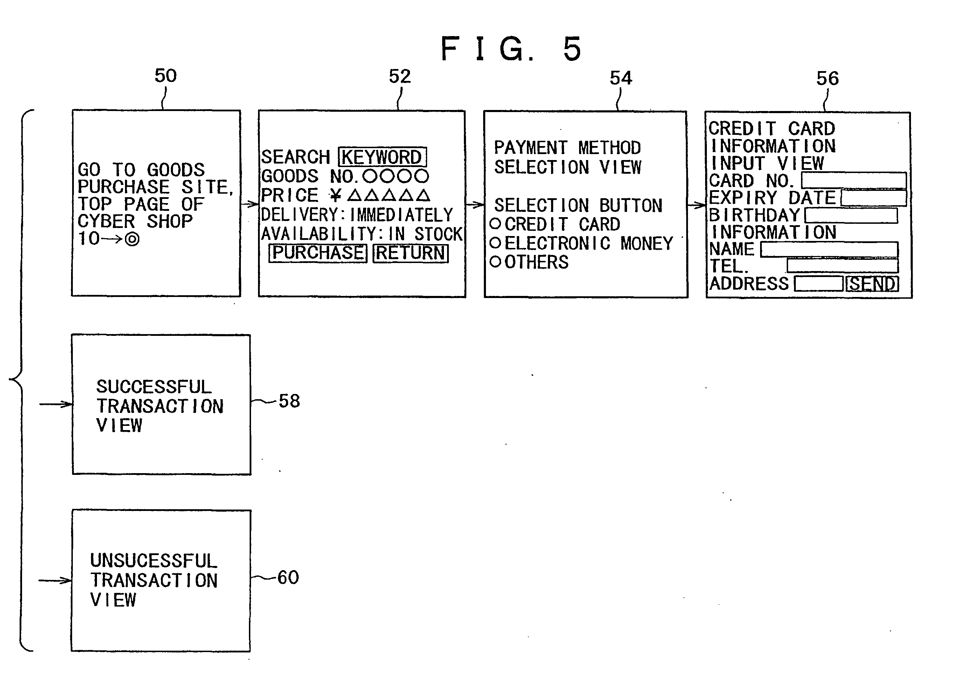

Fig. 5 is a view showing, by way of example, views in a home page of the cyber shop 10 which are displayed on the browser of the goods purchase candidate 6 in the steps of the electronic commerce transaction carried out by a goods purchase candidate 6, a cyber shop 10, an electronic commerce support center 2, and an authentication database 24 in the electronic commerce supporting system for carrying out the electronic commerce supporting method and the electronic commerce method according to the embodiment of the present invention.

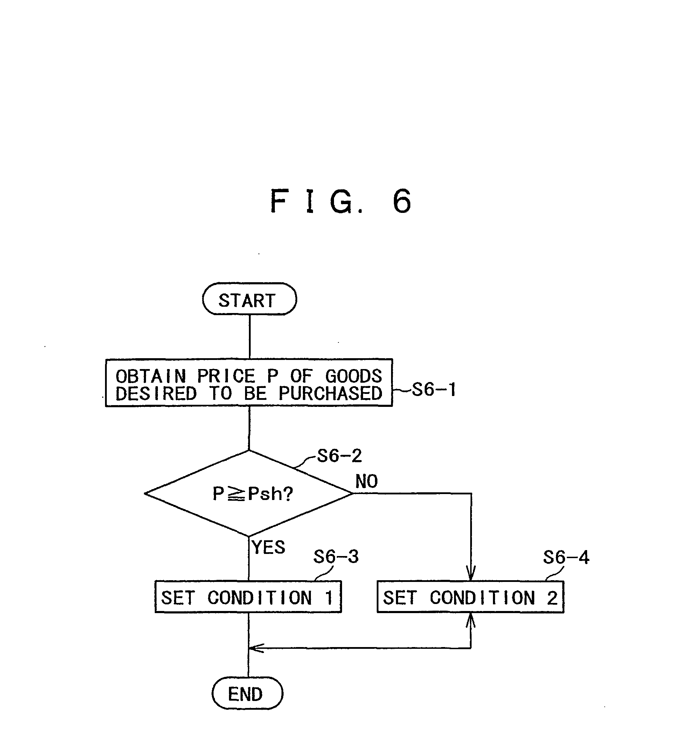

Fig. 6 is a flowchart of an operation sequence of authentication decision software 44e in step S6 shown in Fig. 4 in the electronic commerce supporting system for carrying out the electronic commerce supporting method and the electronic commerce method according to the embodiment of the present invention.

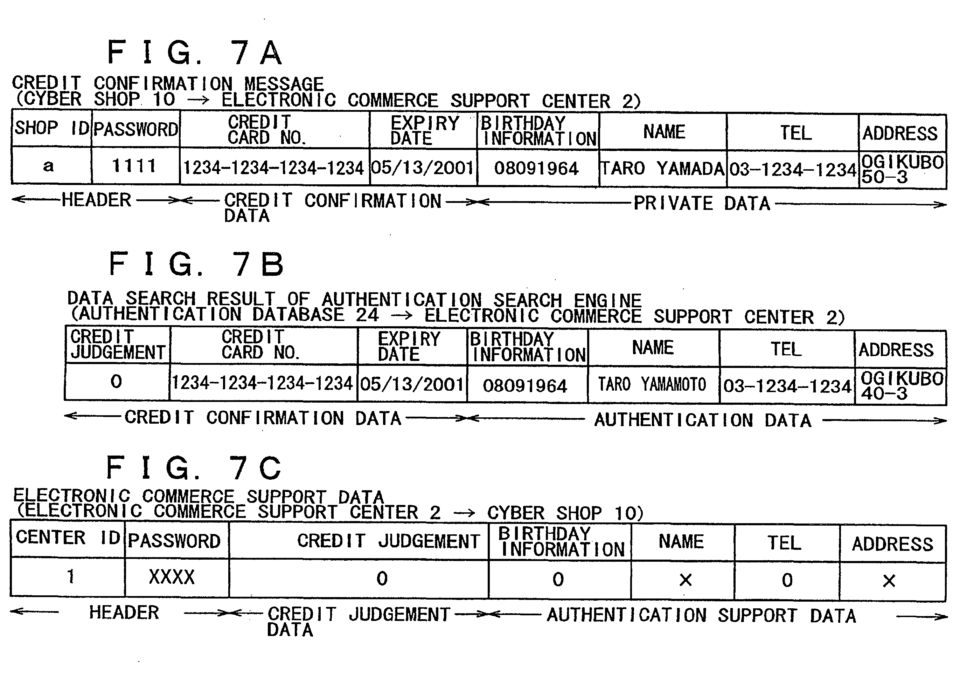

Fig. 7A is a diagram showing a credit confirmation message in the electronic commerce supporting system for carrying out the electronic commerce supporting method and the electronic commerce method according to the embodiment of the present invention; Fig. 7B is a diagram showing the data search result of an authentication search engine; Fig. 7C is a diagram showing electronic commerce support data.

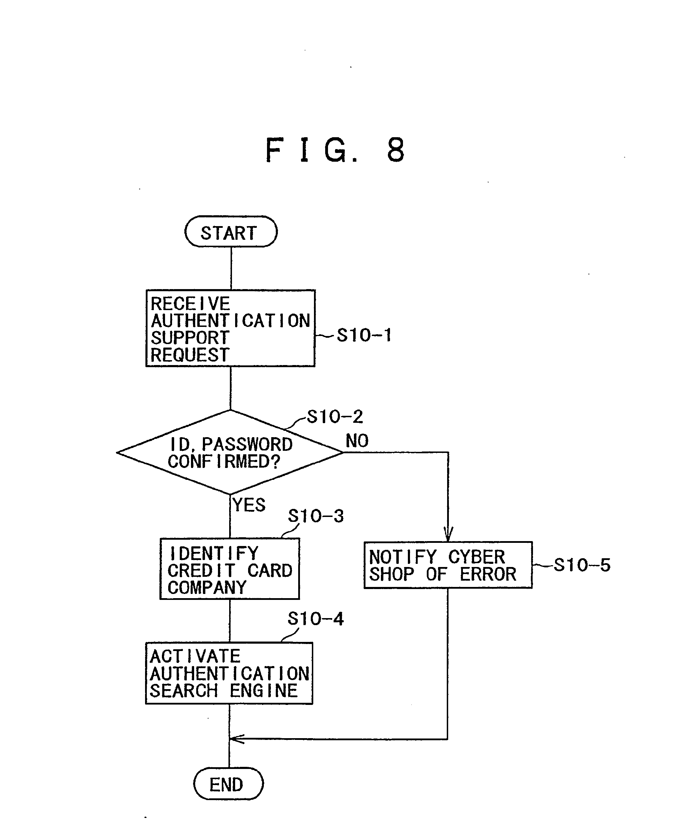

Fig. 8 is a flowchart of an operation sequence of an authentication support server 30 in step S10 shown in Fig. 4 in the electronic commerce supporting system for carrying out the electronic commerce supporting method and the electronic commerce method according to the embodiment of the present invention.

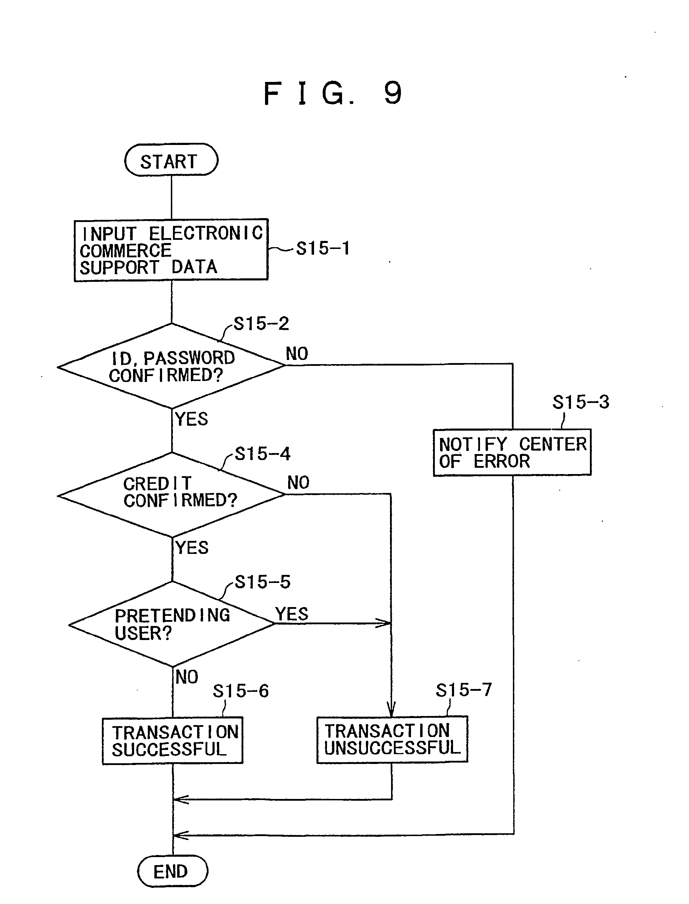

Fig. 9 is a flowchart of an operation sequence of the authentication decision software 44e in step S15 shown in Fig. 4 in the electronic commerce supporting system for carrying out the electronic commerce supporting method and the electronic commerce method according to the embodiment of the present invention.

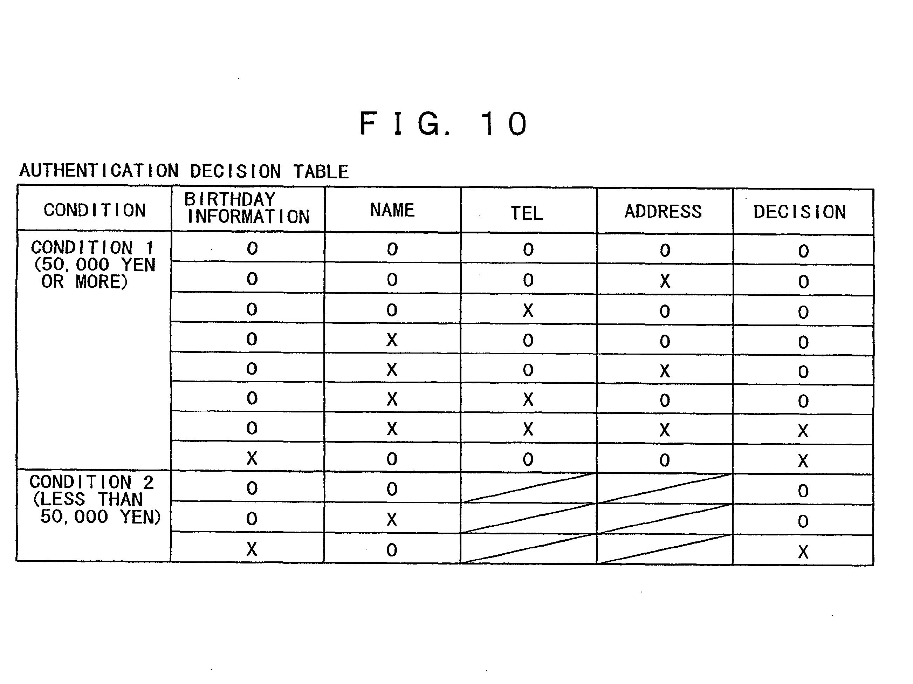

Fig. 10 is a diagram showing an authentication decision table 46 in the electronic commerce supporting system for carrying out the electronic commerce supporting method and the electronic commerce method according to the embodiment of the present invention.

### Best Mode for Carrying Out the Invention

An electronic commerce supporting method according to an embodiment of the present invention and an electronic commerce method using the electronic commerce supporting method will be described below with reference to Figs. 1 through 10. First, an electronic commerce supporting system according to the embodiment of the present invention will briefly be described below with reference to Fig. 1. Fig. 1 shows a network structure in the present embodiment. As shown in Fig. 1, an electronic commerce supporting system 1 according to the embodiment of the present invention has cyber shops (two in Fig. 1) 10, 12 that are connected to a communications network 4 and present in a cyber space, and goods purchase candidates (two in Fig. 1) 6, 8 for accessing the cyber shops 10, 12 for purchasing goods with credit cards.

The communications network 4 is either a domestic or international value-added communication network (VAN) or a network comprising a combination thereof. One example of the combination of domestic and international value-added communication networks is so-called the Internet. The communications network 4 also includes a packet communications network which is used for data transfer through cellular phone or the like and a communications network including as network components digital public telephone networks such as ISDN, etc. The communications network 4 further includes a communications network interconnecting a digital television broadcast network (including both wireless and wired networks such as cable television) and public telephone networks. The communications network 4 is therefore representative of a wide concept including any one of various communications broadcasting networks and combinations thereof.

If the communications network 4 is the Internet, for example, then the goods purchase candidates 6, 8 connect to the communications network 4 through a dedicated line or a public network from a workstation or a PC (goods purchase candidate client) having an electronic mail send/receive function and a browser function. The browser has a function to access a given URL (Uniform Resource Locator) on the Internet and display a home page thereof. The goods purchase candidates 6, 8 can access the cyber shops 10, 12 on the Internet, acquire goods information, and send their intention to purchase goods and credit card information through the browser.

The cyber shops 10, 12 have an electronic commerce server for processing various requests about purchasing goods from the goods purchase candidates 6, 8. The cyber shops 10, 12 can provide goods information to the goods purchase candidates 6, 8 and send data to and receive data from the goods purchase candidates 6, 8 for carrying out a goods purchasing procedure through the Internet.

If the communications network 4 is a network including a packet communications network, then the goods purchase candidates 6, 8 can send data to and receive data from the cyber shops 10, 12 via the packet communications network using cellar phone units having an electronic mail send/receive function and a browser function.

The rapid advances in recent years of the information technology (IT) allow users to use communications networks with PCs easily. Furthermore, electronic commerce is frequently and widely carried out using mobile communications units (cellular phone units and private handy phone (PHS (registered trademark) units)) and private digital assistants. Services using cellular phone units as Internet connection terminals have already begun. For example, in the i mode (trademark of NTT DoCoMo) provided by NTT DoCoMo Inc., it is possible to connect a cellular phone unit having a browser function to the Internet through an i-mode center to access to the cyber shops 10, 12 and purchase goods in the cyber shops 10, 12.

In the electronic commerce support system according to the present embodiment, the cyber shops 10, 12 are connected to an electronic commerce support center 2 via a dedicated line (first communication circuit) 20 different from the communications network 4. In response to an authentication support request from the cyber shops 10, 12, the electronic commerce support center 2 sends a credit confirmation of a credit card and authentication support data for finding an act of pretender to the cyber shops 10, 12 based on credit card data which the goods purchase candidates 6, 8 have presented to the cyber shops 10, 12 in an electronic commerce transaction.

To generate credit judgement data and authentication support data, the electronic commerce support center 2 can access authentication database 24 installed in each of credit card companies (three credit card companies A, B, C in Fig. 1) through a dedicated line (second communication circuit) 22 different from the communication network 4 and the dedicated line 20. The electronic commerce support center 2 compares private data for confirming the users of credit card, which have been attached to credit confirmation messages received from the cyber shops 10, 12 with private data of the credit cards stored in the authentication database 24, and returns not only credit judgement data but also authentication support data as a material for determining whether the users of the credit cards are true or not.

The cyber shops 10, 12 and the electronic commerce support center 2 may be connected to each other by an OBN (Open Business Network) connection or an Internet VPN connection rather than the dedicated line 20. The OBN is an IP (Internet Protocol) service for business separate from the Internet. The OBN is low in cost and can cover the almost entire area of Japan for high-speed communications with a wide bandwidth and high security comparable with the dedicated line. The Internet VPN is a service which allows users to use the Internet as a dedicated network. While the Internet VPN is easily connectable to overseas networks, it may occasionally be lower in security and narrower in bandwidth than the dedicated line and the OBN.

Since private data and financial information flow between the cyber shops 10, 12 and the electronic commerce support center 2, it is preferable to transfer data using any one of the above communications services for security against data tapping and forging and also for high-rate communications for real-time processing.

The commerce support center 2 and the authentication databases 24 may be connected to each other by an OBN connection, for example, rather than the dedicated line 22.

Fig. 2 shows an internal structure of the electronic commerce supporting center 2 according to the present embodiment. The electronic commerce supporting center 2 has an authentication support server 30 for receiving and processing various requests from the cyber shops 10, 12. The authentication support server 30 has a computer which is connected to the dedicated lines 20, 22 by a communications module (communications server), not shown, for processing various requests entered via the dedicated lines 20, 22.

To the authentication support server 30, there is connected a database unit 32 comprising a plurality of databases storing various pieces of information. A memory 34 for storing programs executed by the computer and data is also connected to the authentication support server 30. The database unit 32 and the memory 34 comprise a disk drive for rotating a magnetic disk, an optical disk, or a magnetooptical disk for reading and writing data, or a fixed memory such as a semiconductor memory.

The authentication support server 30 is connected to a management client 36 via a communications module (not shown) separate from the communications module by which it is connected to the dedicated lines 20, 22. The management client 36 comprises a computer for performing various processing processes and information input devices including a keyboard, a mouse, etc. for operating the computer.

The database unit 32 has at least a member shop database 32a and a credit card company database 32b. The member shop database 32a stores shop information about a plurality of member shops, including the cyber shops 10, 12, which use the electronic commerce supporting center 2, together with shop numbers (shop IDs) and passwords of those shops. The shop information of the member shops includes shop IDs and passwords, and is made up of specific letter trains and number trains assigned to identify the member shops. The shop information of the member shops may represent member shop names, addresses, telephone numbers, the names of persons in charge, membership contract dates, contract terms, etc.

The credit card company database 32b stores company information about the credit card companies A, B, C that can be accessed via the dedicated line 22, and authentication IDs and passwords for obtaining the rights to access the authentication databases 24 of the credit card companies. The company information about the credit card companies may represent company names, addresses, telephone numbers, the names of persons in charge, contract dates, contract terms, etc.

The memory 34 stores, in addition to the various programs and data, database management software 34a for maintaining the database unit 32, member shop management software 34b for supporting access to the member shop database 32a and managing the member shops based on various management parameters, credit card company management software 34c for supporting access to the credit card company database 32b, and an authentication search engine 34d.

The authentication search engine 34d sends an authentication ID and password to any one of the authentication databases 24 of the credit card companies A, B, C based on a credit card number described on a credit confirmation message sent from the cyber shops 10, 12 to access the authentication database 24, and reads credit confirmation data for the credit card and authentication data corresponding to the private data for confirming the user of the credit card which has been added to the credit confirmation message.

The authentication support server 30 compares the authentication data read by the authentication search engine 34d with the private data added to the credit confirmation message, and returns the comparison result as electronic commerce support data to the cyber shop which has sent the credit confirmation message. The returned electronic commerce support data contains the determined result of the effectiveness of the credit card, credit judgement data, and authentication support data indicative of whether the private data is in conformity with the authentication data or not.

Fig. 3 shows an internal structure of the cyber shop 10 in the electronic commerce supporting system 1 according to the embodiment of the present invention. Since the cyber shop 12 is identical in arrangement to the cyber shop 10, only the cyber shop 10 will be described below by way of example. The cyber shop 10 has an electronic commerce server 40 for receiving and processing various requests about electronic commerce from the goods purchase candidates 6, 8. The electronic commerce server 40 has a computer which is connected to the communications network 4 and the dedicated line 20 by a communications module (communications server), not shown, for processing various requests entered via the communications network 4 and the dedicated line 20.

To the electronic commerce server 40, there is connected a database unit 42 comprising a plurality of databases storing various pieces of information. A memory 44 for storing programs executed by the computer and data is also connected to the electronic commerce server 40. The database unit 42 and the memory 44 comprise a disk drive for rotating a disk as described above for reading and writing data, or a solid-state memory.

The electronic commerce server 40 is connected to a management client 48 via a communications module (not shown) separate from the communications module by which it is connected to the communication network 4 and the dedicated line 20. The management client 48 comprises a computer for performing various processing and information input devices including a keyboard, a mouse, or the like for operating the computer.

The database unit 42 has at least a customer database 42a and a goods database 42b. The customer database 42a stores information about goods purchasers who have already used the cyber shop 10. The information about goods purchasers may represent, for example, identification numbers (IDs) and passwords of the goods purchasers, and private attribute information including addresses, names, ages, genders, or telephone numbers, etc., and goods purchase information including the classifications, names, prices, payment methods of goods which have been purchased in the past. The customer database 42a is used mainly for sales promotion, in connection with the sending of direct mail and various customer services.

The goods database 42b stores information about goods that can be dealt with by the cyber shop 10. The, information about goods includes information as to goods classifications, prices, inventories, delivery times, accumulated sold quantities in association with goods codes. The goods database 42b can be used for various purposes including the extraction of goods that are sold well and inventory control.

The memory 44 stores, in addition to the various programs and data, database management software 44a for maintaining the database unit 42, customer management software 44b for supporting access to the customer database 42a and managing the customers based on various management parameters, goods management software 44c for supporting access to the goods card company database 42b and managing goods based on various management parameters, and a search engine 44d for searching the various databases in the database unit 42.

The memory 44 also stores authentication decision software 44e for judging "pretender" using the authentication support data among the electronic commerce support data received from the authentication support server 30 in the electronic commerce supporting center 2. The memory 44 also stores an authentication decision table 46 which is used for authentication judgement by the authentication decision software 44e. Operation of the authentication decision software 44e using the authentication decision table 46 will be described later on with reference to the drawings.

An operation sequence of the electronic commerce supporting method in the electronic commerce support system thus arranged and the electronic commerce method using the electronic commerce supporting method will be described below with reference to FIGS. 1 through 3 and also FIGS. 4 through 10. It is assumed that the goods purchase candidate 6 operates a PC or the like to connect to the cyber shop 10 which provides a home page on the communications network 4 (which is assumed to be the Internet) for electronic commerce. Fig. 4 shows a chronological sequence of an electronic commerce transaction carried out by the goods purchase candidate 6, the cyber shop 10, the electronic commerce support center 2, and the authentication database 24 in the electronic commerce supporting system according to the embodiment of the present invention. Fig. 5 shows, by way of example, views in the home page of the cyber shop 10 which are displayed on the browser of the goods purchase candidate 6.

First, the goods purchase candidate 6 displays the web browser on the display screen of the PC and enters a URL of the cyber shop 10 to display a top page 50 of the cyber shop 10 as shown in Fig. 5 via the communications network 4. Then, the goods purchase candidate 6 displays places a mouse pointer on a "goods purchase site" button on the top page 50, and clicks on the button to send a goods purchase view display request (step S1).

Having received the goods purchase view display request, the electronic commerce server 40 of the cyber shop 10 displays a goods purchase view 52 as shown in Fig. 5 on the browser of the goods purchase candidate 6 (step S2). When the goods purchase candidate 6 enters a search key word for desired goods from the goods purchase view 52, the electronic commerce server 40 activates the goods management software 44c, which searches the goods database 42b based on the search key word entered by the goods purchase candidate 6 and displays the search result on the goods purchase view 52.

If the goods purchase candidate 6 finds the desired goods on the goods purchase candidate 6 displayed on the browser, the goods purchase candidate 6 places the mouse pointer and clicks on "PURCHASE" on the goods purchase view 52, sending a goods purchase request (step S3).

The electronic commerce server 40 which has received the goods purchase request sends data of a payment method selection view 54 as shown in Fig. 5 for the selection of a payment method to display the payment method selection view 54 on the browser of the goods purchase candidate 6 (step S4). If the goods purchase candidate 6 selects a credit card payment, then a credit card payment request to the cyber shop 10 (step S5).

Having received the credit card payment request, the electronic commerce server 40 activates the authentication decision software 44e to determine a private data input item for confirming the user of the credit card, which is to be added to a credit confirmation message to be sent to the electronic commerce supporting center 2 (step S6).

An operation sequence of the authentication decision software 44e in step S6 will be described below with reference to Fig. 6. The authentication decision software 44e first activates the database search engine 44d to search the goods database 42b and stores the price P of the goods desired by the goods purchase candidate 6 in a given memory (step S6-1).

Then, the authentication decision software 44e determines whether or not the price P is equal to or higher than a threshold amount Psh (step S6-2). In the present example, amounts of money for purchasing goods are classified into those equal to or higher than the threshold amount Psh and those lower than the threshold amount Psh. The number of private data items to be collected for confirming the credit card user when the price P is equal to or higher than the threshold amount Psh is different from the number of private data items when the price P is smaller than the threshold amount Psh.

If the price P is equal to or higher than the threshold amount Psh, then because damage which is caused by a charge back (pay back) is expected to be large, the processing goes to step S6-3 in which private data are collected under "condition 1" for higher decision accuracy. If the price P is smaller than the threshold amount Psh, then because damage which is caused by a charge back is expected to be small, the processing goes to step S6-4 in which private data are collected under "condition 2" for lower decision accuracy than "condition 1".

In the present example, the threshold amount Psh is set to Psh = 50000 yen. The "condition 1" is characterized by four private data items including "birthday information (four-figure information representing month and date or eight- or six-figure information representing year, month and date)", "name", "telephone number", and "address", to be added to the credit confirmation message for confirming the credit card user, and the "condition 2" is characterized by two private data items including "birthday information" and "name" to be added to the credit confirmation message for confirming the credit card user. The private data items to be entered are not limited to the above items, but may be determined depending on the authentication data stored in the authentication databases 24 of the credit card companies when the credit card is issued or subsequently renewed.

After the above condition has been set, data of a credit card information input view 56 as shown in Fig. 5 is sent to display the credit card information input view 56 on the browser of the goods purchase candidate 6 (step S7). The credit card information input view 56 has a predetermined number of blanks depending on the private data items determined in step S6. In the credit card information input view 56 shown in Fig. 5, the "condition 1" is set.

When the goods purchase candidate 6 enters the credit card number, the expiry date, and the requested private data and clicks on the "send" button, the entered information is sent to the cyber shop 10 (step 8).

The authentication decision software 44e of the electronic commerce server 40 of the cyber shop 10 generates a credit confirmation message as shown in FIG. 7A based on the received information. The credit confirmation message is generally divided into at least a header, credit confirmation data, and private data. The header contains at least the shop ID and password given from the electronic commerce supporting center 2. The credit confirmation data contains the credit card number and card expiry date which have been entered by the goods purchase candidate 6 on the browser. The private data contains the "birthday information", "name", "telephone number", and "address" which have been entered by the goods purchase candidate 6 on the browser.

The electronic commerce server 40 arranges the generated credit confirmation message as one or more packets, writes an authentication support request in the header of the packet or packets, and sends the generated credit confirmation message via the dedicated line 20 to the electronic commerce supporting center 2 (step S9). The above process is carried out not only in the electronic commerce transaction between the goods purchase candidate 6 and the cyber shop 10, but also in electronic commerce between many other goods purchase candidates and many other member shops belonging to the electronic commerce supporting center 2. Credit confirmation messages with private data added thereto are sent from a plurality of cyber shops via the dedicated line 20 to the electronic commerce supporting center 2.

The electronic commerce supporting center 2 receives and processes authentication support requests from the cyber shops 10, 12 (step S10). An operation sequence of the authentication support server 30 of the electronic commerce supporting center 2 in step S10 will be described below with reference to Fig. 8. When the authentication support server 30 receives the authentication support request (step S10-1), the authentication support server 30 reads the shop ID and password from the header of the credit confirmation message represented by the authentication support request, and determines whether the cyber shop represented by the authentication support request is a member shop registered in the member shop database 32a or not (step S10-2).

If the cyber shop is not a member shop, then the authentication support server 30 notifies the cyber shop of an error (see step S10-5 and step S10-5 indicated by the broken line in Fig. 4), and finishes the processing in step S10 shown in Fig. 4. If the cyber shop is confirmed as a member shop, then the authentication support server 30 specifies a credit company based on the credit card number in the credit confirmation data of the credit confirmation message (step S10-3). Then, the authentication support server 30 activates the authentication search engine 34d to access the authentication database 24 of the specified credit card company (step S10-4), and then finishes the processing in step S10 shown in Fig. 4.

Then, the authentication support server 30 uses the authentication search engine 34d to send an authentication ID and password via the dedicated line 22 to access the authentication database 24 of the specified credit card company (step S11), and reads credit confirmation data for the credit card and authentication data corresponding to the private data for confirming the user of the credit card which has been added to the credit confirmation message (step S12). Fig. 7B shows, by way of example, the credit confirmation data and the authentication data stored in a main memory of the authentication support server 30. The credit confirmation data includes credit card judgement data representing a credit limitation for the credit card. In the present example, the credit confirmation data represents "0" if credit is given, and "X" if no credit is given.

When the authentication search engine 34d obtains the search result, the authentication support server 30 compares the private data of the credit confirmation message shown in Fig. 7A with the authentication data (see FIG. 7B) of the search result produced by authentication search engine 34d (step S13).

The comparison result is generated as electronic commerce support data as shown in Fig. 7C. The electronic commerce support data is generally divided into at least a header, credit judgement data, and authentication support data. The header contains a center ID and password which are used by the cyber shop 10 to identify the electronic commerce supporting center 2. The credit judgement data is data obtained as the search result by the authentication search engine 34d. The authentication support data contains the comparison result data representing the "birthday information", "name", "telephone number", and "address" which are successively arranged in the order named. The comparison result data shown in Fig. 7C contains "0" if the compared data are in conformity with each other, and "X" if the compared data are not in conformity with each other. In the example shown in Figs. 7A through 7C, the data on the "name" and "address" are not in conformity with each other, and the other data are in conformity with each other.

The electronic commerce supporting center 2 sends the generated electronic commerce support data as one or more packets via the dedicated line 20 to the cyber shop 10 (step S14).

Based on the received electronic commerce support data, the electronic commerce server 40 of the cyber shop 10 determines according to the authentication decision software 44e whether the electronic commerce transaction is to be concluded or not (step S15).

An operation sequence of the authentication decision software 44e in step S15 will be described below with reference to Fig. 9. First, when the electronic commerce support data is entered (step S15-1), the authentication decision software 44e reads the center ID and password from the header (see FIG. 7C) of the electronic commerce support data, and determines whether the electronic commerce supporting center is the electronic commerce supporting center 2 to which the cyber shop 10 belongs or not (step S15-2).

If the authentication decision software 44e determines that the electronic commerce support data is entered from an electronic commerce supporting center to which the cyber shop 10 does not belong, then the authentication decision software 44e notifies the electronic commerce supporting center of an error (see step S15-3 and step S15-3 indicated by the broken line in Fig. 4), and finishes the processing in step S15 shown in Fig. 4.

If the electronic commerce supporting center is confirmed as the electronic commerce supporting center 2 to which the cyber shop 10 belongs, then the authentication decision software 44e confirms whether the credit limitation in the credit judgement data of the electronic commerce support data shown in Fig. 7C is "0" or not (step S15-4).

If the credit limitation is "X", then since no credit is given, the authentication decision software 44e judges that a payment cannot be made by withdrawing the necessary amount of money from the band account of the goods purchase candidate 6, and the processing goes to step S15-7. The authentication decision software 44e sends data of an unsuccessful transaction view 60 shown in Fig. 5 (step S16 in Fig. 4), displays the reason why the electronic commerce transaction cannot be made on the browser of the goods purchase candidate 6, and thereafter puts the transaction to an end.

If the credit limitation is "0", then since credit is given, the processing goes to step S15-5 to determine the possibility of "pretender" by checking the authentication support data of the electronic commerce support data (see Fig. 7C) against the authentication decision table 46 shown in Fig. 10. The authentication decision table 46 shown in Fig. 10 includes columns of "condition", "birthday information", "name", "telephone number", "address", and "judgement" successively arranged in the order named from the left. The authentication decision software 44e selects one of the "condition 1" and the "condition 2" in the column of "condition" in the authentication decision table 46 based on the condition ("condition 1" or "condition 2") preset in step S6, as a table for judgement.

Since the "condition 1" for four private data items to be entered is set in this example, the authentication decision software 44e uses the "condition 1" in the authentication decision table 46 as a judgement table. The judgement table based on the "condition 1" judges that if the "birthday information" is "X", then the possibility of "pretender" is large (indicated as "X" in the column "judgement" in the table) regardless of the data of the other input items. This is based on the fact that it is rare for a person to make a mistake about its own birthday information.

If only the "birthday information" is "0" and all other input items are "X", then the possibility of "pretender" is also judged as being large. This is based on that fact that it is rare, but more possible, for a person to make a mistake in entering its own name than entering the birthday information. If a person carries and uses another person's credit card with a name indicated on its surface, then the item "name" is meaningless. However, the item "name" is highly effective against an act of "pretender" based on an illegal acquisition of the card number and expiry date and an act of "pretender" based on an unlawful possession of a card with no name indicated on its surface.

When a person moves to a new address or is transferred to a different company work place, the private information on a credit card of that person may not possibly be renewed for a certain period of time. In this case, the items "telephone number" and "address" may highly possibly be "X". Therefore, these items are auxiliary or supplementary in judging "pretender", and particularly important as items for making up for the accuracy of the item "name".

The authentication decision software 44e compares the authentication support data of the electronic commerce support data (see Fig. 7C) with the data in each row of the judgement table under the "condition 1", and refers to the "judgement" for a row in which the data are in conformity with each other with respect to all the four input items. If the "judgement" is "X", then the authentication decision software 44e judges that the attempt is an act of "pretender", and the processing goes to step S15-7. The authentication decision software 44e sends data of the unsuccessful transaction view 60 shown in Fig. 5 (step S16 in Fig. 4), displays the reason why the electronic commerce transaction cannot be made on the browser of the goods purchase candidate 6, and thereafter puts the transaction to an end.

If the "judgement" is "0", then the authentication decision software 44e judges that the attempt is not an act of "pretender" and the credit card user is a true credit card holder, and the processing goes to step S15-6. The authentication decision software 44e sends data of a successful transaction view 58 shown in Fig. 5 (step S16 in Fig. 4), displays a message that the electronic commerce transaction is concluded on the browser of the goods purchase candidate 6, and thereafter puts the transaction to an end.

If the "condition 2" is set in step S6, then the authentication decision software 44e uses the "condition 2" in the authentication decision table 46 as a judgement table. The judgement table under the "condition 2" corresponds to the two input items of "birthday information" and "name", and is established such that the possibility of "pretender" is high unless the "birthday information" is "X".

With the electronic commerce support system, the electronic commerce supporting method, and the electronic commerce method according to the present embodiment, as described above, even though goods purchase candidates and cyber shops are not in face-to-face relation to each other unlike transactions in real shops, and cyber shops cannot actually confirm credit cards and discover forgeries and check signatures on credit cards, it is possible for cyber shops to determine whether credit card users in electronic commerce are true user or not. Therefore, it is possible to prevent, in advance, unauthorized card users from illegally purchasing goods through pretender, thus greatly reducing a charge-back risk.

According to the present embodiment, because cyber shops can not only confirm credit but also determine in real-time whether true users are using credit cards, the security of electronic commerce is increased and the charge-back risk on cyber shops is reduced. As a result, the present invention makes a large contribution to the development of electronic commerce.

The present invention is not limited to the above embodiments, but may be modified in various ways.

For example, in the above embodiment, the electronic commerce supporting center 2 and the authentication database 24 of the credit card companies are connected to each other by the dedicated line 22. However, the credit card companies A, B, C may have respective functions of the electronic commerce supporting center 2 independently of each other. In this case, the credit card companies A, B, C connect to the cyber shops 10, 12 through the dedicated line 20.

In the above embodiment, as shown in the flowchart of Fig. 6, the amounts of money for purchasing goods are classified into those equal to or higher than the threshold amount Psh and those lower than the threshold amount Psh, and the number of private data items to be collected for confirming the credit card user is dynamically changed when the price P is equal to or higher than the threshold amount Psh and when the price P is smaller than the threshold amount Psh. However, while only one threshold amount Psh is provided in the above embodiment, a plurality of threshold amounts, e.g., Psh1 = 50000 yen and Psh2 = 100000 yen, may be provided.

A constant number of private data may be entered regardless of the amount of money for purchasing goods. In this case, a threshold may be provided for the degree of agreement between the private data added to the credit confirmation message and the authentication data of the search result produced by the authentication search engine, and the amount of money for purchasing goods for concluding the transaction may be dynamically changed depending on the degree of agreement.

For example, the number of private data items is fixed to four, and the amount of money for purchasing goods may be dynamically changed depending on the combination of "0"s and "X"s of the items of the authentication support data in the electronic commerce support data returned from the electronic commerce supporting center 2.

In the above embodiment, as shown in step S6-1 shown in Fig. 6, the price P for desired goods is obtained by searching the goods database 42b after the goods purchase candidate 6 has selected goods. However, at the time a goods purchase request (step S3 in Fig. 4) is entered, the price P of the goods displayed on the goods purchase view 52 shown in Fig. 5 may be stored in the main memory of the electronic commerce server 40, and the goods database 42b may not be accessed.

The above embodiment has been described with respect to an existing credit card with a magnetic stripe formed on its surface. However, the present invention is also applicable to IC-card credit cards (including both contact and contactless types) each with a built-in microcomputer and memory, for example.

Credit card information and private data may be encrypted and stored in IC cards, with no such information appearing on the card surface. In this case, the goods purchase candidate 6 holds the IC card close to an IC card reader, which sends card data to the cyber shop 10 and also sends several private data to the cyber shop 10. The cyber shop 10 sends the encrypted information and private data from the IC card as a credit confirmation message to the electronic commerce supporting center 2. The electronic commerce supporting center 2 decrypts the encrypted information, compares the decrypted information with the entered private data to generate electronic commerce support data. In this case, it is not necessary to access the authentication databases 24 of the credit companies.

In the above embodiment, an international security code (CVV2, CVC2, or the like) may be added to a credit confirmation message for increased confirmation accuracy.

In the above description, the private data entered by the goods purchase candidate 6 flows through the cyber shop 10 to the authentication support server 30 of the electronic commerce supporting center 2. However, the private data may send from the goods purchase candidate (person who entered the data) 6 directly to the electronic commerce supporting center 2. In this case, when the payment method by the credit card is selected on the view 54 shown in Fig. 5, and an "OK" button (not shown) is clicked, control goes to the authentication support server 30 of the electronic commerce supporting center 2. For example, an URL linked to the "OK" button may be arranged as "www.name of the authentication support server 30.com/···ID of the cyber shop 10···/". The cyber shop 10 may be determined from a variable http_referer (which stores the URL of a preceding site visited) of the http protocol.

The authentication support server 30 displays a view corresponding to the view 56 on the computer of the user, prompting the user to enter a credit card number and private data. In this case, as described above, the number of private data items to be entered may be changed based on the amount of money for purchasing goods. The private data entered from the computer of the goods purchase candidate 6 is sent directly to the authentication support server 30 of the electronic commerce supporting center 2, not via the cyber shop 10, and the user is authenticated by the authentication support server 30, which then returns the authentication result to the electronic commerce server 40 of the cyber shop 10. The electronic commerce server 40 of the cyber shop 10 determines whether the goods are to be sold or not in the same manner as described above, explanation here is omitted.

According to the present invention, as described above, the charge-back risk on cyber shops in the credit sales in electronic commerce can be reduced.

### Industrial Applicability

The present invention is concerned with an electronic commerce supporting method for carrying out electronic commerce smoothly and safely and an electronic commerce method using such an electronic commerce supporting method, and more particularly to an electronic commerce supporting method for reducing a charge-back risk on cyber shops in credit sales in electronic commerce and an electronic commerce method using such an electronic commerce supporting method.

## Claims

1. An electronic commerce supporting method to be carried out on an authentication support server, comprising the steps of:
providing private data from a goods purchase candidate who selects a credit card payment when the goods purchase candidate purchases goods in a cyber shop on a communications network;
comparing the private data with registered private data of a true holder of the credit card; and
generating authentication support data for supporting in determining whether said goods purchase candidate is said true holder or not and sending the authentication support data to said cyber shop.

2. An electronic commerce supporting method to be carried out on an authentication support server according to claim 1, wherein when the private data is provided from said goods purchase candidate, the number of private data to be entered is determined based on the amount of money for purchasing the goods.

3. An electronic commerce supporting method to be carried out on an authentication support server according to claim 1, wherein said private data includes any one of at least birthday information, telephone number information, name, and address.

4. An electronic commerce method to be carried out on an electronic commerce server for selling goods on a communications network, comprising the steps of:
receiving, from an authentication support server, an authentication result of private data entered from a goods purchase candidate who selects a credit card payment for goods to be purchased; and
determining whether said goods are to be sold or not based on said authentication result.

5. An electronic commerce method to be carried out on an electronic commerce server according to claim 4, wherein said step of determining comprises the step of determining whether said goods are to be sold or not based on an amount of money to be paid and said authentication result.

6. An electronic commerce method to be carried out on an electronic commerce server according to claim 4, wherein said private data includes any one of at least birthday information, telephone number information, name, and address.

7. An electronic commerce support program to be carried out on an authentication support server, comprising:
means for providing private data from a goods purchase candidate who selects a credit card payment when the goods purchase candidate purchases goods in a cyber shop on a communications network;
means for comparing the private data with registered private data of a true holder of the credit card; and
means for generating authentication support data for supporting in determining whether said goods purchase candidate is said true holder or not and sending the authentication support data to said cyber shop.

8. An electronic commerce support program to be carried out on an authentication support server according to claim 7, wherein when the private data is provided from said goods purchase candidate, the number of private data to be entered is determined based on the amount of money for purchasing the goods.

9. An electronic commerce support program to be carried out on an authentication support server according to claim 7, wherein said private data includes any one of at least birthday information, telephone number information, name, and address.

10. An electronic commerce program to be carried out on an electronic commerce server for selling goods on a communications network, comprising:
means for receiving, from an authentication support server, an authentication result of private data entered from a goods purchase candidate who selects a credit card payment for goods to be purchased; and
means for determining whether said goods are to be sold or not based on said authentication result.

11. An electronic commerce program to be carried out on an electronic commerce server according to claim 10, wherein said means for determining comprises means for determining whether said goods are to be sold or not based on an amount of money to be paid and said authentication result.

12. An electronic commerce program to be carried out on an electronic commerce server according to claim 10, wherein said private data includes any one of at least birthday information, telephone number information, name, and address.

13. An authentication support server comprising:
means for providing private data from a goods purchase candidate who selects a credit card payment when the goods purchase candidate purchases goods in a cyber shop on a communications network;
means for comparing the private data with registered private data of a true holder of the credit card; and
means for generating authentication support data for supporting in determining whether said goods purchase candidate is said true holder or not and sending the authentication support data to said cyber shop.

14. An electronic commerce server for selling goods on a communications network, comprising:
means for receiving, from an authentication support server, an authentication result of private data entered from a goods purchase candidate who selects a credit card payment for goods to be purchased; and
means for determining whether said goods are to be sold or not based on said authentication result.
